# EUROPÄISCHE PATENTSCHRIFT

(11) **EP 1 452 268 B1**
(45) Veröffentlichungstag und Bekanntmachung des Hinweises auf die Patenterteilung: **30.11.2005**
(21) Anmeldenummer: 04003885.3
(22) Anmeldetag: 20.02.2004
(51) Int. Cl.: B23Q 11/08

(54) **Teleskop-Abdeckung**
Telescopic cover
Couvercle télescopique

(30) Priorität: 25.02.2003 DE 10308009
(43) Veröffentlichungstag der Anmeldung: 01.09.2004
(73) Patentinhaber: Hennig Holding GmbH, 85551 Kirchheim (DE)
(72) Erfinder: Schönerwald, Kurt, 84186 Vilsheim (DE)
(74) Vertreter: Zinnecker, Armin

(56) Entgegenhaltungen:
- EP-A- 1 074 337
- DE-A- 10 060 139
- DE-A- 19 730 500
- DE-U- 8 611 891
- DE-U- 20 205 993
- GB-A- 1 171 038
- US-A- 4 039 021

## Beschreibung

Die Erfindung betrifft eine Teleskop-Abdeckung, insbesondere für Maschinen, Werkzeugmaschinen oder dergleichen, mit Teleskopelementen, die in Führungen geführt sind.

Derartige Teleskop-Abdeckungen sind bereits bekannt.

Aus der DE 197 30 500 A1 ist ein Auszugsystem mit mindestens drei hintereinander angeordneten und in einer Auszugrichtung sowie einer dazu entgegengesetzten Einschubrichtung zwischen einer Einschubstellung und einer Auszugstellung relativ zueinander bewegbaren Auszugelementen bekannt. Bei diesem Auszugsystem sind zwischen den Auszugelementen Kopplungseinrichtungen vorhanden, die ein gleichmäßiges Ausziehen und Einschieben der Auszugelemente relativ zueinander bewirken.

Aus der DE 100 60 139 A1 ist eine Gliederschürze zum Abdecken von Werkzeugmaschinenteilen mit einer Vielzahl von gelenkig miteinander verbundenen Gliedern bekannt, bei der die einzelnen Glieder der Gliederschürze mit einem Scherengitter verbunden sind.

Die DE 86 11 891 U offenbart eine Teleskopabdeckung mit Teleskopelementen, die in Führungen geführt sind und die miteinander über Zugbänder verbunden sind. Wenn sich die Teleskopabdeckung im zusammengeschobenen Zustand befindet, hängen die zwischen den Teleskopelementen belassenen Bandabschnitte schlaufenartig durch.

Aus der DE 202 05 993 U ist ein längenvariabler Faltenbalg bekannt, der als Schutzabdeckung, insbesondere für Werkzeugmaschinen, dient. Er umfaßt eine ziehharmonikaartig verkürzbare und verlängerbare, in sich abgewinkelte Faltenabdeckung.

Eine Teleskop-Abdeckung nach dem Oberbegriff des Anspruchs 1 ist aus der EP-A-1 074 337 bekannt.

Aufgabe der Erfindung ist es, eine Teleskop-Abdeckung der eingangs angegebenen Art zu verbessern, insbesondere zu vereinfachen.

Erfindungsgemäß wird diese Aufgabe dadurch gelöst, daß die Teleskopelemente durch Faltenelemente, die ziehharmonikaartig faltbar und die als Faltenbälge ausgebildet sind, verbunden sind. Die Faltenelemente sind hinreichend flexibel, um ein Einschieben bzw. Zusammenschieben der Teleskopelemente zu ermöglichen bzw. nicht zu behindern. Sie sind hinreichend formstabil, um ein Auseinanderziehen der Teleskopelemente zu ermöglichen bzw. nicht zu behindern. Beim Zusammenschieben und Auseinanderziehen wirken die Faltenelemente als Kraftübertragungselemente zwischen den Teleskopelementen, vorzugsweise zwischen jeweils zwei benachbarten Teleskopelementen. Scherengitter oder ähnliche Kopplungseinrichtungen sind nicht erforderlich.

Vorteilhafte Weiterbildungen sind in den Unteransprüchen beschrieben.

Die Teleskopelemente können eben sein. Sie können insbesondere durch ebene Platten gebildet werden. Die Teleskopelemente können allerdings auch kastenförmig sein.

Eine weitere vorteilhafte Weiterbildung ist dadurch gekennzeichnet, daß die Faltenelemente beim vollständigen Zusammenschieben auf Block gehen.

Nach einer weiteren vorteilhaften Weiterbildung sind eine oder mehrere Abstützleisten zum Abstützen der Faltenelemente vorgesehen. Dies kann insbesondere dann vorteilhaft oder erforderlich sein, wenn besonders lange Faltenelemente verwendet werden und/oder wenn die Teleskop-Abdeckung in horizontaler Richtung verfahrbar ist.

Ausführungsbeispiele der Erfindung werden nachstehend anhand der beigefügten Zeichnung im einzelnen erläutert. In der Zeichnung zeigt
- Fig. 1: eine erste Ausführungsform einer Teleskop-Abdeckung im zusammengeschobenen Zustand,
- Fig. 2: die Teleskop-Abdeckung gemäß Fig. 1 im auseinandergezogenen Zustand,
- Fig. 3: die Teleskop-Abdeckung gemäß Fig. 1 und Fig. 2 in der der Fig. 2 entsprechenden Stellung von der Rückseite,
- Fig. 4: eine zweite Ausführungsform einer Teleskop-Abdeckung im zusammengeschobenen Zustand,
- Fig. 5: die Teleskop-Abdeckung gemäß Fig. 4 im auseinandergezogenen Zustand,
- Fig. 6: die Teleskop-Abdeckung gemäß Fig. 4 und 5 in waagrechter Einbaulage in einer Ansicht von der Rückseite,
- Fig. 7: eine dritte Ausführungsform einer Teleskop-Abdeckung in einer horizontal hängenden Einbaulage im zusammengeschobenen Zustand,
- Fig. 8: eine vierte Ausführungsform einer Teleskop-Abdeckung im zusammengeschobenen Zustand in einer Ansicht von oben,
- Fig. 9: die Teleskop-Abdeckung gemäß Fig. 8 in einer Ansicht von unten,
- Fig. 10: die Teleskop-Abdeckung gemäß Fig. 8 und 9 im auseinandergezogenen Zustand in einer Ansicht von oben,
- Fig. 11: die Teleskop-Abdeckung gemäß Fig. 10 in einer Ansicht von unten,
- Fig. 12: die Teleskop-Abdeckung gemäß Fig. 8 bis 11 im zusammengeschobenen Zustand in einer seitlichen Schnittansicht und
- Fig. 13: die Teleskop-Abdeckung gemäß Fig. 8 bis 12 im auseinandergezogenen Zustand in einer seitlichen Schnittansicht.

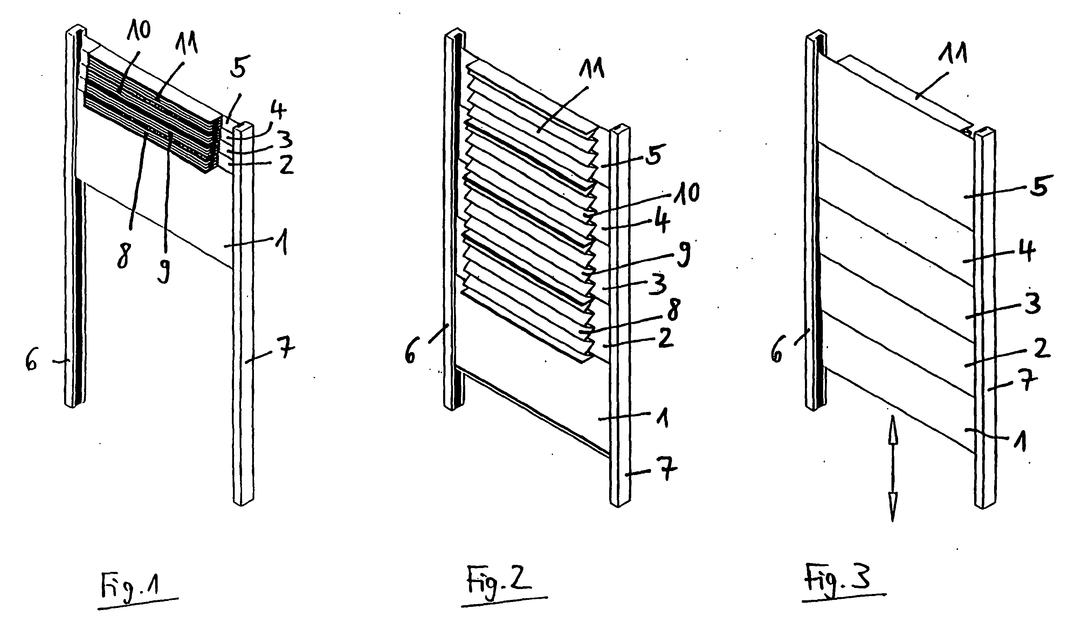

Die in den Figuren 1 bis 3 gezeigte Teleskop-Abdeckung umfaßt fünf vertikal verschiebbare Teleskopelemente 1, 2, 3, 4, 5, die als rechteckige Platten ausgestaltet sind und die seitlich in Führungsleisten 6, 7 geführt sind. In jeder der Führungsleisten 6, 7 ist für jedes Teleskopelement 1 - 5 jeweils eine gesonderte Führung vorhanden. Die Führungen liegen in den Führungsleisten 6, 7 parallel nebeneinander.

Die Teleskopelemente 1 - 5 sind durch ziehharmonikaartig faltbare Faltenelemente 8, 9, 10, 11 miteinander verbunden, wobei jeweils zwei benachbarte Teleskopelemente 1, 2; 2, 3; 3, 4; 4, 5 durch jeweils ein Faltenelement 8, 9, 10, 11 verbunden sind. Das untere Ende des Faltenelements 8 ist mit dem oberen Ende des Teleskopelements 1 verbunden. Das obere Ende des Faltenelements 8 ist mit dem oberen Ende des nach oben benachbarten Teleskopelements 2 verbunden. In analoger Weise sind die nächstfolgenden Teleskopelemente durch das jeweils nächstkommende Faltenelement verbunden. Ferner ist das obere Ende des Faltenelements 8 mit dem unteren Ende des nächsthöheren Faltenelements 9 verbunden.

Die Faltenelemente 8-11 sind als Faltenbälge ausgebildet. Sie sind in der aus Fig. 1 und 2 ersichtlichen Weise zieharmonikaartig gefaltet. Die Faltenelemente 8-11 erstrecken sich über annähernd die gesamte Breite der Teleskopelemente 1 - 5. Die Anordnung ist insbesondere derart getroffen, daß die gesamte nutzbare Breite abgedeckt wird. Die Faltenelemente 8-11 wirken gleichzeitig abdichtend.

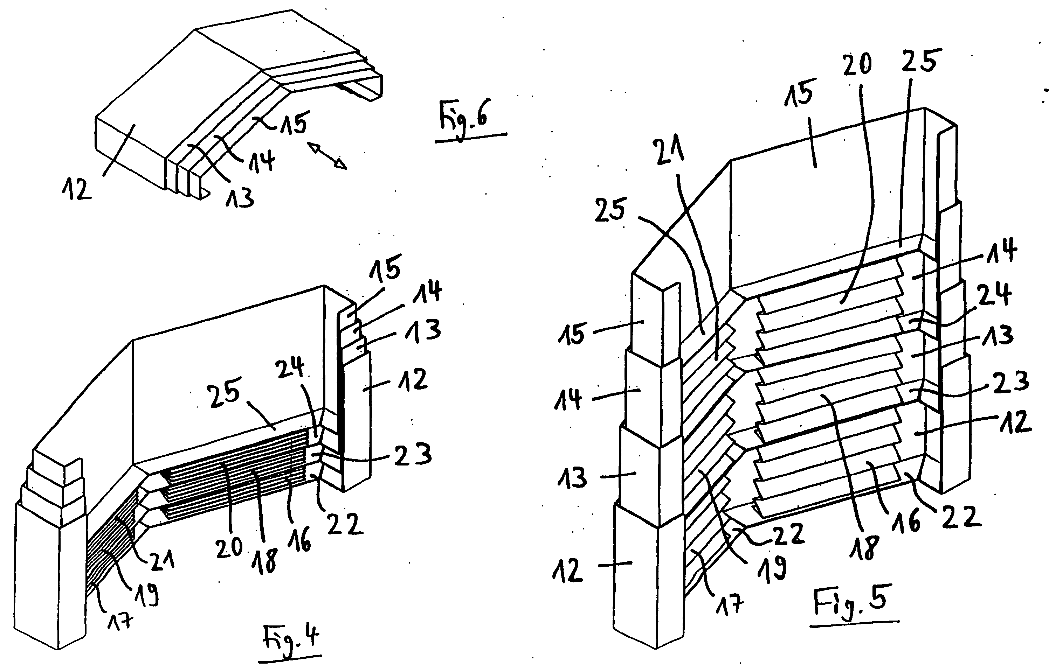

Bei der in Fig. 4-6 gezeigten Ausführungsform sind vier vertikal oder horizontal verschiebbare Teleskopelemente 12, 13, 14, 15 vorhanden, die jeweils kastenförmig ausgebildet sind. Jeweils zwei benachbarte Teleskopelemente 12, 13; 13, 14; 14, 15 sind durch jeweils zwei nebeneinander liegende, als Faltenbälge ausgebildete Faltenelemente 16, 17; 18, 19; 20, 21 verbunden. Die Teleskopelemente 12-15 weisen an ihren unteren Enden nach innen gerichtete Abkantungen 22, 23, 24, 25 auf, an denen die Faltenelemente 16, 17; 18, 19; 20, 21 befestigt sind.

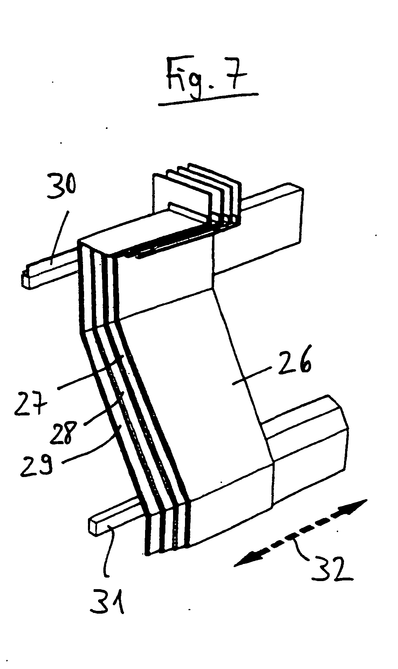

Aus Fig. 6 ist ersichtlich, daß die Teleskop-Abdeckung nicht nur - wie in Fig. 1 - 3 und Fig. 4-5 gezeigt - in vertikaler Richtung, sondern auch in horizontaler Richtung eingebaut werden kann.

Bei der in Fig. 7 gezeigten Ausführungsform sind die vier Teleskopelemente 26, 27, 28, 29 horizontal verschieblich und vertikal hängend eingebaut. Sie sind in eine obere horizontale Schiene 30 eingehängt und stützen sich an einer unteren horizontalen Schiene 31 ab. Die Teleskop-Abdeckung kann in horizontaler Richtung 32 verfahren werden.

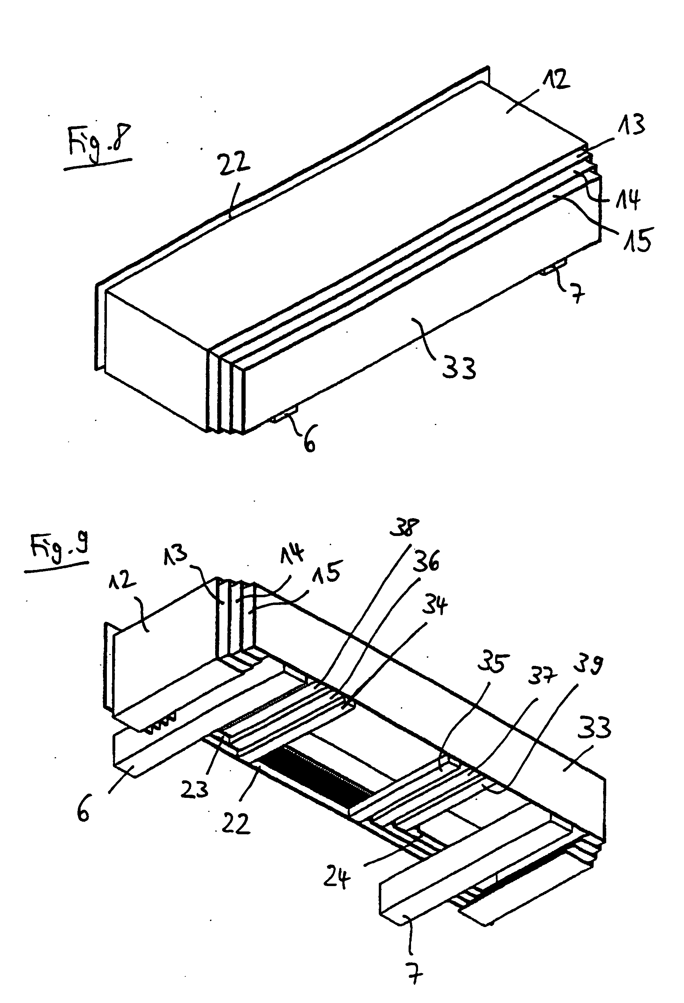

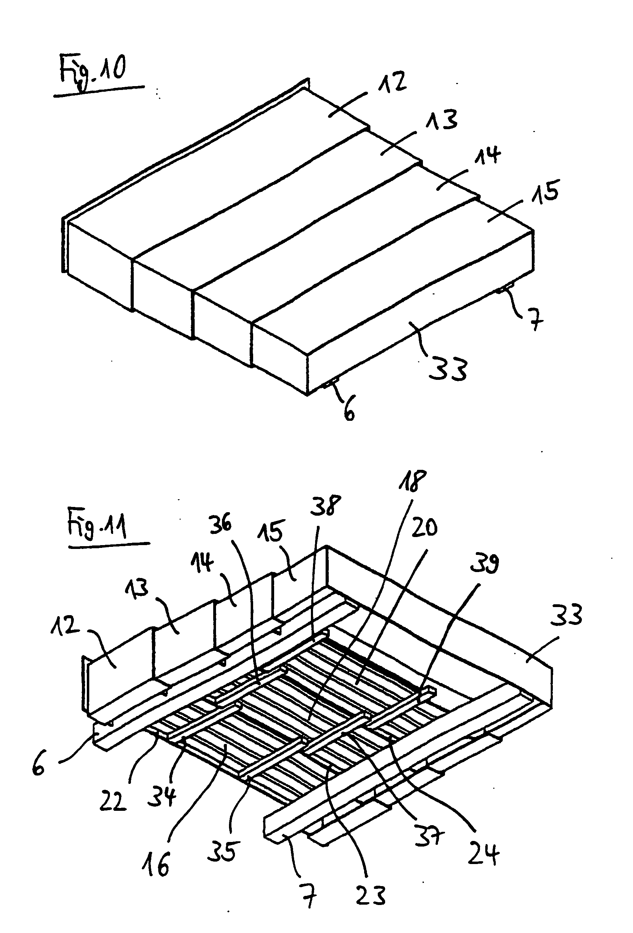

Die Fig. 8 bis 13 zeigen eine Ausführungsform einer Teleskop-Abdeckung, die derjenigen der Fig. 4 bis 6 ähnlich ist und bei der entsprechende Teile mit denselben Bezugszeichen versehen sind. Sie besteht aus vier kastenförmigen Teleskopelementen 12, 13, 14, 15, die horizontal verschiebbar sind. Die Teleskopelemente 12 - 15 sind links und rechts auf jeweils einer Führungsleiste 6, 7 längsverschieblich geführt. Das innerste Teleskopelement 15 weist an seinem Ende ein Abschlußblech 33 auf, das maschinenfest befestigt ist, nämlich an den Enden der Führungsleisten 6, 7. Die äußeren Teleskopelemente 12, 13, 14 weisen an ihrem inneren Ende jeweils einen Abstreifer 40 auf, mit dem das innere Ende des Teleskopelements 12, 13, 14 auf dem jeweils nächstfolgenden Teleskopelement 13, 14, 15 aufliegt. Die Abstreifer 40 erfüllen auf diese Weise eine Abstützfunktion und eine Abdichtfunktion. Sie können aus Metall, insbesondere Messing, oder Kunststoff hergestellt sein.

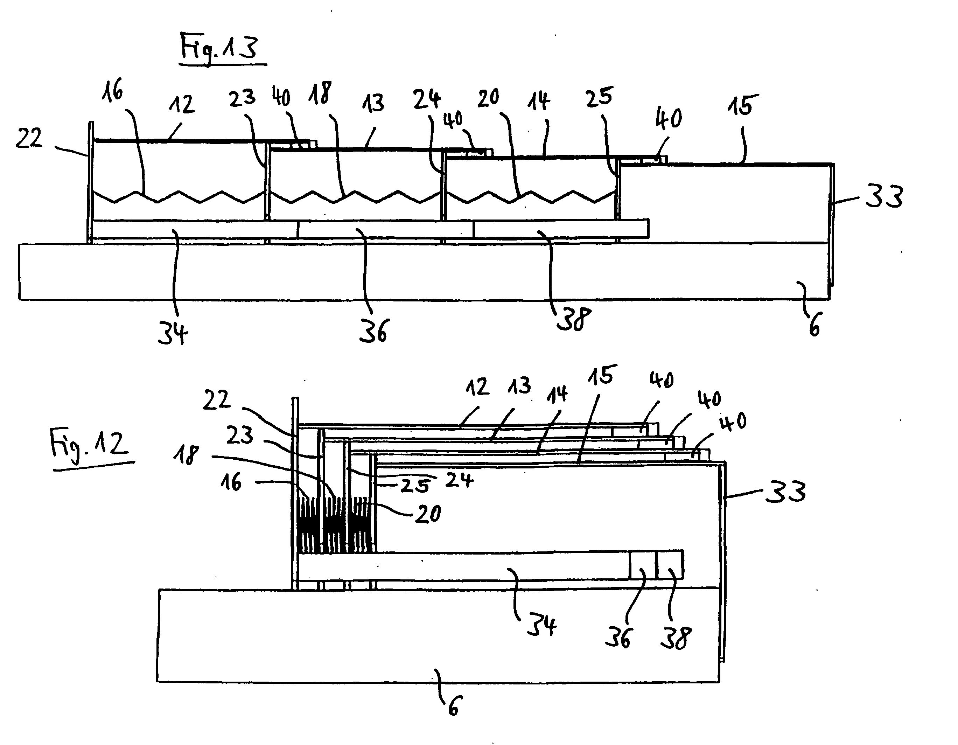

Jedes Teleskopelement 12 - 15 ist mit einer Rückwand 22, 23, 24, 25 versehen, die quer zur Ebene der Führungsleisten 6, 7 verläuft. An den Rückwänden 22, 23; 23, 24; 24, 25 benachbarter Teleskopelemente 12, 13, 14 ist jeweils ein als Faltenbalg ausgebildetes, ziehharmonikaartig faltbares Faltenelement 16, 18, 20 befestigt. Wie aus Fig. 12 ersichtlich gehen die Faltenelemente 16, 18, 20 beim vollständigen Zusammenschieben der Teleskop-Abdeckung auf Block.

Mit den drei äußeren Teleskopelementen 12, 13, 14 sind jeweils zwei Abstützleisten 34, 35; 36, 37; 38, 39 verbunden, die horizontal und parallel zu den Führungsleisten 6, 7 verlaufen und die jeweils paarweise ineinander gestaffelt sind. Die Abstützleisten 34, 35 sind mit der Rückwand 22 des äußersten Teleskopelements 12 verbunden. Sie erstrecken sich zum nächsten Teleskopelement 13 hin und durchgreifen eine Aussparung in der Rückwand 23 dieses nächsten Teleskopelements 13. In entsprechender Weise sind die Abstützleisten 36, 37 mit der Rückwand 23 des Teleskopelements 13 verbunden. Sie liegen außerhalb der Abstützleisten 34, 35 des Teleskopelements 12 und durchgreifen die Rückwand 24 des nächstliegenden Teleskopelements 14. Analog hierzu sind die Abstützleisten 38, 39 mit der Rückwand 24 des Teleskopelements 14 verbunden. Sie durchgreifen die Rückwand 25 des Teleskopelements 15 und liegen außerhalb der Abstützleisten 36, 37.

Die Abstützleisten 34 - 39 verlaufen unterhalb der Faltenelemente 16, 18, 20. In der ausgezogenen Stellung der Teleskop-Abdeckung sind die Abstützleisten 34 - 39 von den Faltenelementen 16, 18, 20 in der aus Fig. 13 ersichtlichen Weise beabstandet. Wenn sich die Teleskop-Abdeckung in der in Fig. 12 gezeigten zusammengeschobenen Stellung befindet, liegen die Falten der Faltenelemente 16, 18, 20 annähernd oder tatsächlich auf den Abstützleisten 34 - 39 auf. Durch die Abstützleisten 34 bis 39 kann insbesondere bei langen und/oder horizontal verlaufenden Faltenelementen 16, 18, 20 sichergestellt werden, daß die Faltenelemente 16, 18, 20 nicht über das zulässige Maß hinaus durchhängen. Die Faltenelemente 16, 18, 20 liegen dann auch im auseinandergezogenen Zustand auf den Abstützleisten 34 - 39 auf. Durch die Abstützleisten 34 - 39 ist dann gewährleistet, daß die Faltenelemente auch beim Zusammenschieben ihren ziehharmonikaartig gefalteten Zustand beibehalten.

Durch die Erfindung wird eine Teleskop-Abdeckung geschafften, die insbesondere für Maschinen, Werkzeugmaschinen und ähnliches verwendbar ist. Die Teleskop-Abdeckung kann als Stahlabdeckung ausgebildet sein. Als seitliche Führungen für die Teleskopelemente können Kammleisten verwendet werden. Die Teleskopelemente können insbesondere als Bleche oder Kästen ausgebildet sein.

Als Material für die ziehharmonikaartig faltbaren Faltenelemente bzw. Faltenbälge können Gewebe, beschichtete Gewebe, Planen, beispielsweise Kraftfahrzeugplanen oder Lastwagenplanen, oder Materialien aus Stoff verwendet werden. Vorzugsweise wird ein geeignet flexibles Material verwendet, das eine ausreichende Flächenstabilität aufweist.

Die Teleskop-Abdeckung kann durch die Faltenelemente ausgezogen und eingeschoben werden. Dabei kann die Anordnung insbesondere derart getroffen sein, daß die Falten beim vollständigen Zusammenschieben auf Block gehen.

Wenn die Teleskopelemente als Kästen ausgebildet sind, können sie durch Abkantungen und/oder durch Verschweißen hergestellt sein.

## Patentansprüche

1. Teleskop-Abdeckung mit Teleskopelementen (1, 2, 3, 4, 5; 12, 13, 14, 15; 26, 27, 28, 29), die in Führungen geführt sind und die durch Faltenelemente (8, 9, 10, 11; 16, 17; 18, 19; 20, 21), die ziehharmonikaartig faltbar sind, verbunden sind,
**dadurch gekennzeichnet,**
**daß** die Faltenelemente (8 - 11; 16 - 21) als Faltenbälge ausgebildet sind.

2. Teleskop-Abdeckung nach Anspruch 1, **dadurch gekennzeichnet, daß** die Teleskopelemente (12 - 15) kastenförmig sind.

3. Teleskop-Abdeckung nach Anspruch 1 oder 2, **dadurch gekennzeichnet, daß** die Faltenelemente (8 - 11; 16 - 21) beim vollständigen Zusammenschieben auf Block gehen.

4. Teleskop-Abdeckung nach einem der vorhergehenden Ansprüche, **dadurch gekennzeichnet, daß** eine oder mehrere Abstützleisten (34, 35; 36, 37; 38, 39) zum Abstützen der Faltenelemente (16 - 21) vorgesehen sind.

## Claims

1. Telescopic cover with telescopic elements (1, 2, 3, 4, 5; 12, 13, 14, 15; 26, 27, 28, 29) which are guided in guides and which are connected by folding elements (8, 9, 10, 11; 16, 17; 18, 19; 20, 21) which can be folded in a concertina-like manner, **characterized in that** the folding elements (8-11; 16-21) are designed as bellows.

2. Telescopic cover according to Claim 1, **characterized in that** the telescopic elements (12-15) are box-shaped.

3. Telescopic cover according to Claim 1 or 2, **characterized in that** the folding elements (8-11; 16-21) are blocked during full telescopic retraction.

4. Telescopic cover according to one of the preceding claims, **characterized in that** one or more supporting strips (34, 35; 36, 37; 38, 39) are provided for supporting the folding elements (16-21).

## Revendications

1. Couvercle télescopique avec des éléments télescopiques (1, 2, 3, 4, 5; 12, 13, 14, 15; 26, 27, 28, 29), qui sont
guidés dans des guides et qui sont reliés par des éléments de soufflet (8, 9, 10, 11; 16, 17; 18, 19; 20, 21), qui peuvent être pliés en accordéon,
**caractérisé en ce que**
les éléments de soufflet (8 -11; 16 - 21) sont conçus comme des soufflets.

2. Couvercle télescopique selon la revendication 1,
**caractérisé en ce que** les éléments télescopiques (12 - 15) sont en forme de caisse.

3. Couvercle télescopique selon la revendication 1 ou 2,
**caractérisé en ce que** les éléments de soufflet (8 - 11; 16 - 21) forment un bloc lorsqu'ils sont complètement repliés.

4. Couvercle télescopique selon l'une quelconque des
revendications précédentes, **caractérisé en ce qu'**une ou plusieurs baguettes de soutien (34, 35; 36, 37; 38, 39) sont prévues pour le soutien des éléments de soufflet (16 - 21).
